# EUROPÄISCHE PATENTANMELDUNG

(11) **EP 2 786 832 A2**
(43) Veröffentlichungstag der Anmeldung: **08.10.2014**
(21) Anmeldenummer: 14001044.8
(22) Anmeldetag: 21.03.2014
(51) Int. Cl.: B23K 23/00

(54) **Verfahren zur Herstellung verschleißfester Wirkflächen von miteinander in Wirkverbindung stehenden metallischen Bauteilen**

(30) Priorität: 03.04.2013 DE 102013005582
(71) Anmelder: FEW Fahrzeug- und Entwicklungswerk Blankenburg GmbH, 38889 Blankenburg (DE)
(72) Erfinder: Becker, Dietmar, 38889 Blankenburg (DE)
(74) Vertreter: Schuster, Müller & Partner

(57) **Zusammenfassung**

Die Erfindung geht aus von einem Verfahren zur Herstellung verschleißfester Wirkflächen von miteinander in Wirkverbindung stehenden metallischen Bauteilen, bei denen die Wirkflächen aus einem Werkstoff bestehen, der eine höhere Festigkeit aufweist als das Grundmaterial, aus dem die Bauteile bestehen, wobei das Material mit der höheren Festigkeit durch ein stoffschlüssiges Verfahren auf das Grundmaterial aufgebracht wird.

Erfindungsgemäß werden die miteinander in Wirkverbindung stehenden Bauteile (1) mit ihren Wirkflächen auf Abstand zueinander positioniert, der durch die Beabstandung entstandene Zwischenraum (2) zumindest beidseitig mittels thermisch stabiler Begrenzungen eingehaust und mit einem flüssigen höherfesten Material ausgegossen. Nach dem Erkalten des höherfesten Materials werden die nunmehr fest miteinander verbundenen Bauteile (1) im Bereich des eingegossenen höherfesten Materials getrennt. In die auf diese Weise entstandenen neuen Stirnflächen (7) der Bauteile (1) wird eine gewünschte Form eingearbeitet.

Dadurch lassen sich kostengünstig sehr dicke verschleißfeste Schichten an zwei Bauteilen gleichzeitg herstellen.

## Beschreibung

### Stand der Technik

Die Erfindung geht aus von einem Verfahren zur Herstellung verschleißfester Wirkflächen von miteinander in Wirkverbindung stehenden metallischen Bauteilen, beispielsweise von Gelenken an Bremsbalken von elektrodynamischen Gleisbremsen, nach dem Oberbegriff des Anspruchs 1.

Bauteile, die verschiedenartig miteinander in Wirkverbindung stehen, sind oft häufig sehr unterschiedlichen, mitunter auch gegensätzlichen Belastungen ausgesetzt. So kann es vorkommen, dass zu den an sich üblichen Belastungen der Bauteile, wie Zug, Druck und/oder Biegung, an den Wirkflächen, über die die Bauteile miteinander oder/und zueinander agieren, sich berühren oder mit Zwischengliedern, beispielsweise Gelenkteilen, wie Bolzen, Kugeln o. dgl., in Berührung kommen, Reibbelastungen auftreten. Zur Gewährleistung einer hohen Lebensdauer der Bauteile müssen die Wirkflächen daher eine hohe Verschleißfestigkeit aufweisen, was beispielsweise durch eine geeignete Werkstoffauswahl für diese Wirkflächen erreichbar ist. Um aus Kostengründen nicht das gesamte Bauteil aus dem höher beanspruchbaren Material, beispielsweise einem höher legierten Stahl herstellen zu müssen, ist es bereits bekannt, das Bauteil aus einem kostengünstigen Werkstoff, der die Anforderungen der von dem Bauteil auszuhaltenden Hauptbelastung erfüllt, herzustellen und die höher beanspruchten Wirkbereiche des Bauteils mit dem höherfesten Werkstoff zu versehen. Ein typisches Beispiel für solche Verbundbauteile sind hartmetallbestückte spanabhebende Werkzeuge. Während der Werkzeugschaft oder -grundkörper in der Regel eine hohe Biegebelastung aushalten und daher mit einer ausreichenden Biegefestigkeit ausgestattet sein muss, besteht die mit dem Werkstück in Eingriff gelangende Werkzeugschneide aus einem Hart- oder Sintermetall. Das Problem bei derartigen Verbundbauteilen besteht in der Gewährleistung einer dauerhaft festen Verbindung zwischen dem Grundwerkstoff und dem höherfesten Werkstoff.

Das soeben geschilderte Problem sehr unterschiedlicher Belastungen an ein und demselben Bauteil tritt beispielsweise bei Bremsbalken von elektrodynamischen Gleisbremsen, wie sie z. B. in der DE 10 2009 012 791 A1 beschrieben sind, auf. Elektrodynamische Gleisbremsen sind zum Zweck des automatischen Abbremsens von gleisgebundenen Fahrzeugen an den Fahrschienen montiert und können bis zu 20 m lang sein. Dazu werden gewöhnlich mehrere Bremsbalken weitgehend gleicher Bauart in Gleislängsrichtung hintereinander angeordnet. Sie liegen dabei entweder auf Gleitleisten oder direkt auf dem freien Ende des Schenkels eines U-förmigen Troges aus ferromagnetischem Material auf. Jeder Bremsbalken besitzt eine eigene Zwangsführung, die seine Verschiebung in Querrichtung zur Schienenlängsachse ermöglicht. Die Bremsbalken sind dabei an der Fahrschiene so angeordnet, dass einander gegenüberliegende Bremsbalken jeweils eine Bremsrille bilden, durch die jedes auf der zugehörigen Fahrschiene rollende Rad eines Schienenfahrzeugs hindurch rollt. Sobald ein metallisches Rad die Bremsrille passiert, werden die Bremsbalken durch die Wirkung der elektromagnetischen Kräfte der Elektrodynamischen Gleisbremse in Richtung des Rades bewegt und bremsen diese ab. Unter der Wirkung der dabei auftretenden dynamischen Kräfte des abzubremsenden Rades werden die Bremsbalken nach oben bewegt und fallen sodann unter Einwirkung der Magnetkräfte und ihres Eigengewichts wieder auf die Gleitleisten des Troges oder - bei Ausführungen ohne Gleitleisten - auf die freien Flächen der Schenkel des Troges zurück. Bedingt durch das mechanisch unvermeidbare Führungsspiel in der Querführung erfährt jeder Bremsbalken zusätzlich noch eine geringe Kippbewegung um die parallel zur Fahrschiene gerichtete innere Kante der Gleitleiste oder des Trogschenkels, wobei jeder Bremsbalken eine unterschiedliche Winkelstellung einnehmen kann.

Um ein Mitnehmen des nächst folgenden Bremsbalkens zu gewährleisten, sind die Bremsbalken an ihren Stirnseiten jeweils über ein Drehgelenk mit senkrechter Drehachse gekoppelt, so dass eine Kette von Bremsbalken entsteht, die untereinander gelenkig verbunden sind. Diese Gelenke werden durch senkrechte halbzylinderförmige Ausnehmungen in den sich jeweils gegenüberliegenden Stirnseiten der Bremsbalken, die einen Kopfbolzen mit einem nach unten gerichteten Kopf aufnehmen, gebildet. Der Kopfbolzen bildet die Drehachse, um die sich die Bremsbalken bewegen. Sein Kopf wird von einer ringförmigen Erweiterung der halbzylinderförmigen Ausnehmung formschlüssig aufgenommen und schleift auf dem Trog oder der Gleitleiste. Zur Gewährleistung einer ausreichenden Schwenkbewegung der Bremsbalken um die Drehachse des Kopfbolzens sind ihre Stirnflächen von ihrer Ausnehmung zu ihrer Außenkante hin in einem Winkel von ca. 10° abgeschrägt, so dass die Stirnseite jedes Bremsbalkens und damit jeweils eine Gelenkhälfte von der halbzylinderförmigen Ausnehmung und zwei einen Winkel von ca. 160° einschließenden Flächen gebildet wird.

Die Bremsbalken werden aus einem Baustahl mit geringem Kohlenstoffgehalt hergestellt und weisen eine dementsprechend geringe Festigkeit auf. Bei der Werkstoffauswahl für diese Bremsbalken muss zusätzlich noch Berücksichtigung finden, dass die Bremsbalken in das elektromagnetische System der Gleisbremse eingebunden sind, d. h. aus einem das Magnetfeld gut leitenden Werkstoff bestehen müssen. Verschleißfeste Werkstoffe, wie z. B. höherfeste Baustähle, haben in der Regel einen höheren Kohlenstoffanteil und weisen zusätzlich Legierungselemente auf, was eine höhere magnetische Remanenz bedingt. Diese ist ausgesprochen schädlich für ein zuverlässiges Löseverhalten der Bremse.

Die Gelenke zwischen den Bremsbalken werden in der Regel nicht geschmiert, da das Schmierfett Schmutz und Bremsabrieb bindet und erfahrungsgemäß der Verschleiß dadurch noch größer würde. Durch das Aufreißen der Bremsrille beim Einlauf des Rades werden die Bremsbalken nacheinander auseinandergeschleudert, wodurch die Gelenke einer hohen Schlagbeanspruchung ausgesetzt sind. Dabei treten hohe partielle Flächenpressungen an den halbzylinderförmigen Ausnehmungen und dem Kopfbolzen auf. Auch die vorherrschenden Betriebsbedingungen im Freien, bei denen die Gelenke zusätzlich zu dem Bremsabrieb auch noch anderweitigem Schmutz sowie jeglichen Witterungseinflüssen ausgesetzt sind, erhöhen die Verschleißanfälligkeit der Gelenke. Aufgrund der beschriebenen extremen Beanspruchungen der Gelenke müssen diese aus einem höherfesten Werkstoff als die Bremsbalken selbst hergestellt werden.

Hierzu ist es bekannt, an die Stirnseiten der Bremsbalken Halbschalen aus einem höherfesten aber schweißbaren Baustahl anzuschweißen. Um ein Fressen zwischen dem Kopfbolzen und den Halbschalen zu vermeiden, wird der Kopfbolzen aus einem Stahl mit einer geringeren Härte hergestellt. Der Nachteil dieser Verfahrensweise besteht darin, dass die für die Schweißnaht zur Verfügung stehende Fläche begrenzt und die Lage der Nähte für die Beanspruchung ungünstig ist. Die Rückseite der Halbschale liegt dabei weitgehend lediglich an der Gegenkontur am Bremsbalken an. Nach längerem Betrieb reißen die Schweißnähte infolge der Kerbwirkung und der hohen Schlagbeanspruchung.

Ebenfalls hat man bereits versucht, die Halbschalenkontur am Bremsbalken durch Auftragsschweißen herzustellen. Hierbei hat sich jedoch gezeigt, dass das Aufbringen der Schweißraupen in der Innenkontur verfahrenstechnisch kompliziert und zeitaufwändig ist. Zudem lassen sich durch Auftragsschweißen nur Schichtdicken von ca. 6 mm erreichen, was für die bei Bremsbalken vorliegenden Beanspruchungsverhältnisse zu gering ist.

Hierzu ist auch ein Verfahren zur Herstellung von Balken-Gleisbremsen bekannt, bei dem für eine bessere Verbindung der Auftragsschweißung mit dem Bremsbalken dieser an der Gelenkstelle eine Ausnehmung aufweist, die mittels einer definiert in der Ausnehmung zu bewegenden Schweißelektrode schichtweise mit unterschiedlichen Materialien aufgefüllt wird (US 2,648,750). Auch dieses Verfahren ist sehr zeitaufwändig.

Eine ähnliche Verfahrensweise beschreibt ein Verfahren zum Aufpanzern der Gravur von Gesenken zum Schmieden von Formteilen. Zunächst werden die Gesenkformen allseitig der Gravur bis zu einer bestimmten Tiefe ausgenutet. Es folgt ein mehrlagiger Schweißauftrag bis zu einer Dicke, die gering über dem Soll-Niveau der Gravur liegt, so dass die Gravuroberfläche aus reinem Schweißgut besteht. Anschließend wird die Sollkontur der Gravur in die oberen Schweißlagen eingearbeitet (DE 42 00 106 A1).

Ferner ist bekannt, die Festigkeit der Einströmkante von Turbinenschaufeln durch eine aufgeschweißte Panzerung, z. B. aus einer Hartlegierung, aus Hartmetall oder Schnellarbeitsstahl zu erhöhen. Nach einer anschließenden Glättung der Unebenheiten der Aufschweißung wir diese im Gesenk zusammen mit dem Schaufelkörper auf Endmaß verformt und einer abschließenden Wärmebehandlung unterworfen (DE 17 52 430 A).

### Die Erfindung und ihre Vorteile

Das erfindungsgemäße Verfahren mit den Merkmalen des Anspruchs ermöglicht eine kostengünstige Herstellung verschleißfester Wirkflächen von miteinander in Wirkverbindung stehenden Bauteilen, beispielsweise betriebssicherer Gelenke an Bremsbalken Elektrodynamischer Gleisbremsen. Das wird dadurch erreicht, dass die miteinander in Wirkverbindung stehenden Bauteile unter Einhaltung eines definierten Abstandes mit ihren Wirkflächen zueinander positioniert werden, der durch die Beabstandung entstandene Zwischenraum beidseitig mittels thermisch stabiler Begrenzungen eingehaust und mit einem flüssigen höherfesten Material ausgegossen wird, das sich stoffschlüssig mit den angrenzenden Bauteilen verbindet. Nach dem Erkalten des flüssigen Materials werden die inzwischen fest miteinander verbundenen Bauteile im Bereich des nunmehr ausgefüllten Zwischenraums getrennt. Auf diese Weise wurde an jedes Bauteil ein Materialbereich angeformt, dessen Dicke etwa dem halben Abstand entspricht, mit dem es zuvor zu dem gegenüberliegenden Bauteil positioniert wurde. In die so entstandene neue Außenfläche jedes Bauteils wird abschließend die gewünschte Kontur der Wirkfläche, beispielsweise durch eine mechanische Bearbeitung, eingearbeitet.

Vorteilhaft ist ferner, dass durch dieses Verfahren verschleißfeste Wirkflächen an zwei Bauteile gleichzeitg angeformt werden. Außerdem ist der Formenaufwand wesentlich geringer als beim einzelnen Anformen einer Wirkfläche an ein Bauteil, dadurch dass die Form lediglich aus zwei Formwänden besteht, die beidseitig dichtend an den Bauteilen anzuordnen sind.

Ein weiterer wesentlicher Vorteil besteht darin, dass sich mit diesem Verfahren sehr dicke verschleißfeste Schichten an die Bauteile anfügen lassen. Dabei wird der Abstand der beiden Bauteile so gewählt, dass sich die für die Wirkverbindung erforderliche Kontur der Wirkfläche aus der Stirnfläche herausarbeiten lässt, ohne dass durch die Bearbeitung das Basismaterial des Bauteils angegriffen wird. Durch die Wahl des Materials, mit dem der Zwischenraum ausgegossen wird, lassen sich die Eigenschaften der Wirkfläche der Bauteile bestimmen.

Nach einer vorteilhaften Ausgestaltung der Erfindung erfolgt bei aus Stahl bestehenden Bauteilen das Verschweißen der beiden Bauteile durch eine Thermitschweißung. Das ist ein bewährtes Verfahren zum Verbinden von solchen aus Stahl bestehenden Bauteilen, die zumindest im Bereich ihrer Verbindung eine identische oder nahezu identische Querschnittsfläche aufweisen, was bei Schienen aber auch bei Bremsbalken von Elektrodynamischen Gleisbremsen der Fall ist.

Nach einer anderweitigen vorteilhaften Ausgestaltung der Erfindung erfolgt das Trennen der beiden Bauteile in der Mitte des in den Zwischenraum eingefüllten höherfesten Materials. Dadurch ist die Länge des angeformten Bereichs an den Stirnflächen der beiden Bauteile gleich groß.

Nach einer zusätzlichen vorteilhaften Ausgestaltung der Erfindung werden die Stirnflächen der Bauteile vor dem Vergießen mit Vertiefungen und/oder Erhebungen versehen. Dies dient der Vergrößerung der Oberfläche, mit der das höherfeste Material verschmilzt, wodurch eine festere Verbindung des höherfesten Materials mit dem Grundmaterial gewährleistet ist. Die Vertiefungen und/ oder Erhebungen können durch eine spezielle Formgebung an den Stirnflächen der Bauteile aber auch durch Aufrauen derselben erreicht werden.

Weitere Vorteile und vorteilhafte Ausgestaltungen der Erfindung sind der nachfolgenden Beschreibung, der Zeichnung und den Ansprüchen entnehmbar.

### Zeichnung

Ein Ausführungsbeispiel der Erfindung ist in der Zeichnung dargestellt und im Folgenden näher beschrieben. In der Zeichnung zeigen:
- Fig. 1: eine Draufsicht auf zwei Bremsbalken im verbundenen Zustand,
- Fig. 2: die beiden Bremsbalken mit angeformtem Gelenkbereich und
- Fig. 3: eine räumliche Darstellung der beiden Bremsbalken im gefügten Zustand.

### Beschreibung des Ausführungsbeispiels

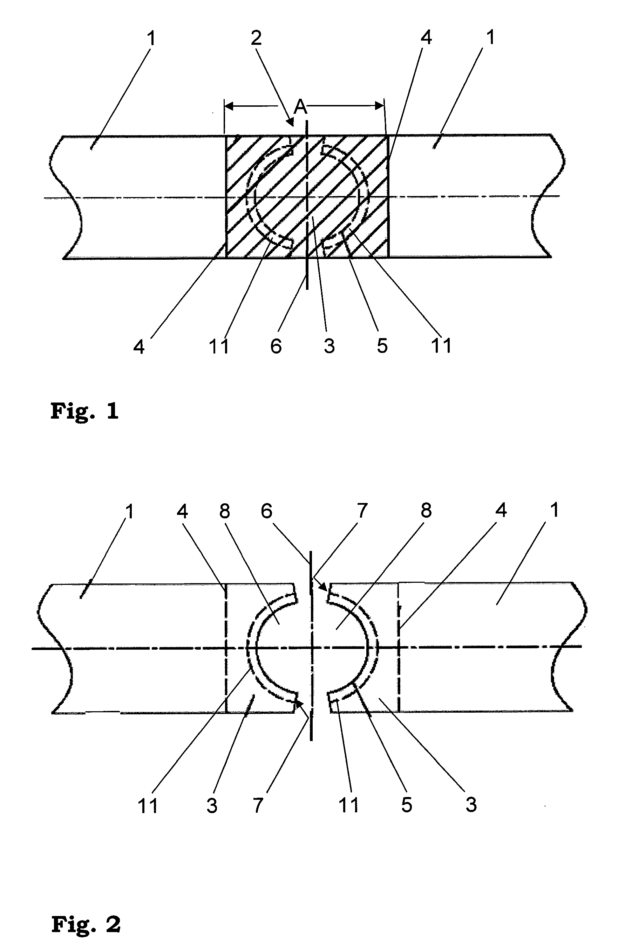

Fig. 1 zeigt zwei aus einem Baustahl mit einem geringen Kohlenstoffgehalt, z. B. RSt 37-2 (S 234 JRG 2) bestehende Bremsbalken 1, die im Abstand A hintereinander angeordnet sind, so dass sich zwischen ihren Stirnseiten ein Zwischenraum 2 bildet. Dieser Zwischenraum 2 wird beidseitig der in Längsrichtung verlaufenden Seitenflächen der Bremsbalken 1 mit schmelztemperaturbeständigen Wänden (hier nicht dargestellt) abgedichtet und durch eine Thermitschweißung mit einem Schweißgut ausgefüllt, das im vorliegenden Beispiel aus Portionsgüte H220 besteht, wobei H220 für eine Brinellhärte von HB220 steht. Nach Beendigung der Thermitschweißung und Abkühlung besteht zwischen den beiden Bremsbalken 1 eine Schweißverbindung 3, die in Fig. 1 schraffiert dargestellt wurde. Die ehemaligen Stirnseiten der Bremsbalken 1 bilden nunmehr mit der Schweißverbindung 3 Grenzflächen 4. In dem mit Schweißgut gefüllten Zwischenraum 2 ist die Kontur des Gelenkbereichs der Bremsbalken in Form zweier Halbschalen 5 gestrichelt angedeutet, wie sie an den im Betriebszustand in Wirkverbindung stehenden Stirnseiten der Bremsbalken 1 ausgebildet sein müssen, um als eine verschleißfeste Lagerschale dienen zu können. Daraus ist zu erkennen, dass der gesamte Gelenkbereich der Bremsbalken 1, in den die Halbschalen 5 eingearbeitet werden, aus dem höherfesten Material besteht. Die Mitte des gefüllten Zwischenraums 2 ist mit einer Trennlinie 6 angedeutet, an der die Schweißverbindung 3 im nächsten Schritt getrennt wird. Durch die Trennung entsteht an jedem Bremsbalken 1 eine neue Stirnfläche 7 (Fig. 2).

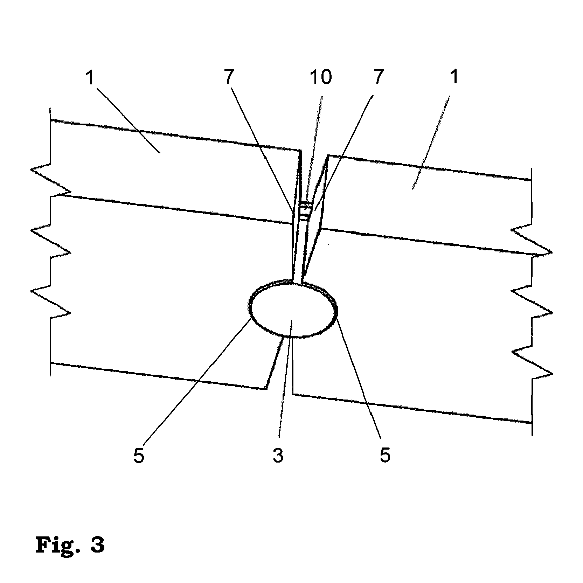

Den Zustand nach der Trennung und einer anschließenden Formgebung der Stirnflächen 7 zeigt Fig. 2. Im vorliegenden Beispiel sind in die neuen Stirnflächen 7 halbzylinderförmige Ausnehmungen 8 eingebracht, so dass die o. g. Halbschalen 5 zur Aufnahme eines Bolzens 9 (Fig. 3) entstanden sind. Außerdem sind die Stirnflächen 7 jeweils zur senkrechten Außenkante der Bremsbalken 1 hin in einem Winkel von 10° abgeschrägt, um im Betriebszustand eine horizontale Winkelbeweglichkeit der Bremsbalken 1 zu ermöglichen.

Fig. 3 zeigt in einer räumlichen Darstellung die mittels des Bolzens 9 gelenkig miteinander verbundenen Bremsbalken 1. An seiner Unterseite weist der Bolzen 9 einen im Durchmesser vergrößerten Kopf 10 auf, der von der ringförmigen Ausnehmung 11 der Halbschale 5, wie sie in den Fig. 1 und 2 zu erkennen ist, aufgenommen wird.

Die Erfindung ist keineswegs auf Bremsbalken von Elektrodynamischen Gleisbremsen beschränkt. Sie ist insbesondere dort vorteilhaft anwendbar, wo die Wirkbereiche von miteinander in Wirkverbindung stehenden Bauteilen, also jene Bereiche, die unmittelbar oder über Zwischenteile miteinander in mechanischem Eingriff stehen und daher einem Verschleiß unterliegen, verschleißfest ausgelegt sein müssen, ohne deshalb das gesamte Bauteil aus einem diesen höheren Ansprüchen genügenden Werkstoff herstellen zu müssen. Besonders vorteilhaft ist die Erfindung jedoch auf solche Bauteile anwendbar, die eine gleiche, zumindest aber ähnliche Gestalt aufweisen.

Alle in der Beschreibung, den nachfolgenden Ansprüchen und der Zeichnung dargestellten Merkmale können sowohl einzeln als auch in beliebiger Kombination miteinander erfindungswesentlich sein.

### Bezugszahlenliste

- 1: Bremsbalken
- 2: Zwischenraum
- 3: Schweißverbindung
- 4: Grenzfläche
- 5: Halbschale
- 6: Trennlinie
- 7: Neue Stirnfläche
- 8: halbzylinderförmige Ausnehmung
- 9: Bolzen
- 10: Kopf
- 11: Ringförmige Ausnehmung
- A: Abstand

## Patentansprüche

1. Verfahren zur Herstellung verschleißfester Wirkflächen von miteinander in Wirkverbindung stehenden metallischen Bauteilen (1), bei denen die Wirkflächen aus einem Werkstoff bestehen, der eine höhere Festigkeit aufweist als das Grundmaterial, aus dem die Bauteile (1) bestehen, wobei das Material mit der höheren Festigkeit durch ein stoffschlüssiges Verfahren auf das Grundmaterial aufgebracht wird,
**dadurch gekennzeichnet,**
- **dass** die miteinander in Wirkverbindung stehenden Bauteile (1) unter Einhaltung eines definierten Abstandes (A) mit ihren Wirkflächen zueinander positioniert werden, der durch die Beabstandung entstandene Zwischenraum (2) zumindest beidseitig mittels thermisch stabiler Begrenzungen eingehaust und mit einem flüssigen höherfesten Material ausgegossen wird, so dass die beiden Bauteile (1) miteinander verschweißen,
- **dass** nach dem Erkalten des höherfesten Materials die nunmehr fest miteinander verbundenen Bauteile (1) im Bereich des eingegossenen höherfesten Materials getrennt werden und
- **dass** in die auf diese Weise entstandenen neuen Stirnflächen (7) der Bauteile (1) eine gewünschte Form eingearbeitet wird.

2. Verfahren nach Anspruch 1,
**dadurch gekennzeichnet,**
**dass** bei aus Stahl bestehenden Bauteilen das Verschweißen der beiden Bauteile (1) durch eine Thermitschweißung erfolgt.

3. Verfahren nach Anspruch 1 oder 2,
**dadurch gekennzeichnet,**
**dass** das Trennen der beiden Bauteile (1) in der Mitte des in den Zwischenraum eingegossenen höherfesten Materials erfolgt.

4. Verfahren nach einem der Ansprüche 1, 2 oder 3,
**dadurch gekennzeichnet,**
**dass** die Stirnflächen der Bauteile (1) vor dem Vergießen mit Vertiefungen und/oder Erhebungen versehen werden.
